# EUROPEAN PATENT SPECIFICATION

(11) **EP 3 664 499 B1**
(45) Date of publication and mention of the grant of the patent: **23.08.2023**
(21) Application number: 18842137.4
(22) Date of filing: 27.07.2018
(51) Int. Cl.: H04B 7/06

(54) **BEAM MEASUREMENT REPORTING METHOD AND DEVICE, TERMINAL AND STORAGE MEDIUM**
VERFAHREN UND VORRICHTUNG ZUR MELDUNG VON MESSUNGEN GERICHTETER FUNKSIGNALE, ENDGERÄT UND SPEICHERMEDIUM
PROCÉDÉ ET DISPOSITIF DE SIGNALEMENT DE MESURE DE FAISCEAU, TERMINAL ET SUPPORT D'INFORMATIONS

(30) Priority: 31.07.2017 CN 201710638795
(43) Date of publication of application: 10.06.2020
(73) Proprietor: ZTE Corporation, Shenzhen, Guangdong 518057 (CN)
(72) Inventor: FANG, Jianmin, Shenzhen Guangdong 518057 (CN); SHI, Xiaojuan, Shenzhen Guangdong 518057 (CN)
(74) Representative: Lavoix
(86) International application number: PCT/CN2018/097513
(87) International publication number: WO 2019/024799

(56) References cited:
- CN-A- 106 471 751
- CN-A- 106 576 265
- CN-A- 106 817 762
- US-A1- 2015 223 096
- US-A1- 2017 150 487
- ZTE: "Discussion on beam recovery mechanism", 3GPP DRAFT; R1-1707121 DISCUSSION ON BEAM RECOVERY MECHANISM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 8 May 2017 (2017-05-08), XP051263429, Retrieved from the Internet: URL:http://www.3gpp.org/ftp/tsg_ran/WG1_RL 1/TSGR1_89/Docs/ [retrieved on 2017-05-08]
- OPPO: "Further Issues on Mobility Related to Beams", 3GPP DRAFT; R2-1704093_FURTHER ISSUES ON MOBILITY RELATED TO BEAMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Hangzhou, China; 20170515 - 20170519 14 May 2017 (2017-05-14), XP051274701, Retrieved from the Internet: URL:http://www.3gpp.org/ftp/Meetings_3GPP_ SYNC/RAN2/Docs/ [retrieved on 2017-05-14]
- CMCC: "Considerations on threshold for deriving cell quality", 3GPP DRAFT; R2-1705785 CONSIDERATIONS ON THRESHOLD FOR DERIVING CELL QUALITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Hangzhou, China; 20170515 - 20170519 14 May 2017 (2017-05-14), XP051276070, Retrieved from the Internet: URL:http://www.3gpp.org/ftp/Meetings_3GPP_ SYNC/RAN2/Docs/ [retrieved on 2017-05-14]

## Description

### TECHNICAL FIELD

The present application relates to the field of mobile communications, and for example, to a beam measurement reporting method and device, a terminal and a storage medium.

### BACKGROUND

In a cellular mobile communication system, cell reselection and handover are extremely important functions. In order to implement the cell reselection successfully, a user equipment (UE) needs to measure signal quality of different cells so as to select a suitable cell for camping. After establishing connection with a network in a certain cell, the UE still needs to measure signal quality of neighboring cells, so as to select a suitable cell for handover, thereby satisfying a mobility requirement.

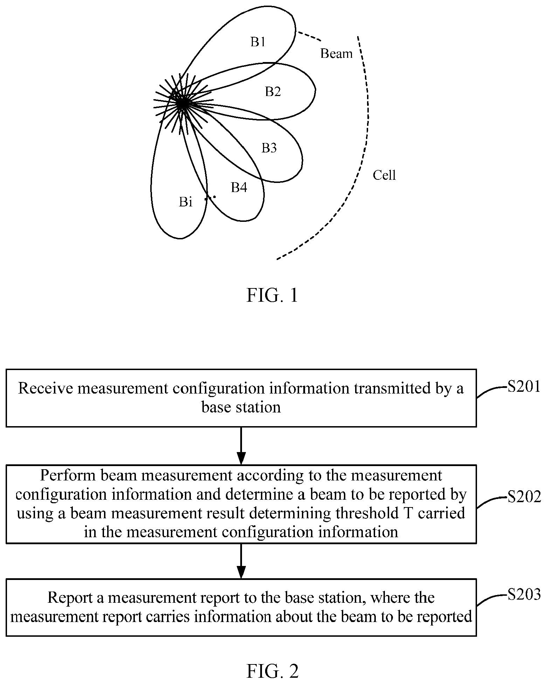

In a system before the fifth-generation mobile communication technology (5G), a measurement object is usually a cell. For example, in long term evolution (LTE), the UE measures reference signal received power (RSRP) and reference signal received quality (RSRQ) of the cell. In a 5G network, a base station may include multiple cells, and each cell may include multiple beams. FIG. 1 is a schematic diagram of the cell and beams.

However, the problem how to report measurement of a beam is not solved in the related art.

The document US2017150487 A1 discloses a method and apparatus for configuring a resource and a communications system. The document R1-1707121 discloses the architecture of beam recovery for NR. The document R2-1704093 discloses the benefits of UE reporting beams measurements results.

### SUMMARY

The present application provides a beam measurement reporting method and device, a terminal and a storage medium configured to implement cell beam measurement reporting in a 5G network.

The invention is set out in the appended set of claims.

### BRIEF DESCRIPTION OF DRAWINGS

Various other advantages and benefits will become apparent to those skilled in the art through reading the detailed description of the preferred embodiments hereinafter. The drawings are merely used for the purpose of illustrating the preferred embodiments and are not construed as a limit of the present invention. Moreover, the same reference numerals in the drawings indicate the same components. In the drawings:
FIG. 1 is a schematic diagram of a cell and beams in the related art;
FIG. 2 is a flowchart of a beam measurement reporting method according to a first embodiment of the present application;
FIG. 3 is a flowchart of a beam measurement reporting method according to a second embodiment of the present application;
FIG. 4 is a structural block diagram of a beam measurement reporting device according to a third embodiment of the present application; and
FIG. 5 is a structural diagram of a terminal according to a fourth embodiment of the present application.

### DETAILED DESCRIPTION

Exemplary embodiments of the present disclosure will be described in detail with reference to the drawings. The drawings illustrate the exemplary embodiments of the present disclosure, but it should be understood that the present disclosure may be implemented in various ways and should not be limited to the embodiments set forth herein. On the contrary, these embodiments are provided for a thorough understanding of the present disclosure and to fully convey the scope of the present disclosure to those skilled in the art.

In a connected state, a process of cell signal measurement is as follows. A base station transmits measurement configuration information to a UE, where the measurement configuration information includes measurement identification, a measurement object, reporting configuration and other related attributes of measurement. The UE performs the measurement according to the measurement object and the reporting configuration in the measurement configuration information, and generates a measurement report according to a measurement result and reports the measurement report to the base station.

When a condition (for example, event triggered reporting or periodic reporting) configured in the reporting configuration is met, the UE reports the corresponding measurement report to the base station.

A first embodiment of the present application provides a beam measurement reporting method applied to a terminal. As shown in FIG. 2, the method includes steps S201 to S203 described below.

In step 201, the measurement configuration information transmitted by the base station is received.

In step S202, beam measurement is performed according to the measurement configuration information and a beam to be reported is determined by using a beam measurement result determining threshold T carried in the measurement configuration information.

In step S203, the measurement report is reported to the base station, where the measurement report carries information of the beam to be reported.

In this embodiment of the present application, the measurement configuration information includes, but is not limited to, the measurement object, the reporting configuration and the measurement identification. The reporting configuration includes the beam measurement result determining threshold T.

In an embodiment of the present application, determining the beam to be reported by using the beam measurement result determining threshold T carried in the measurement configuration information in step S202 includes determining whether measurement results of multiple beams are all not greater than the threshold T, determining a beam corresponding to the best measurement result of current measurement as the beam to be reported if the measurement results of the multiple beams are all not greater than the threshold T, and otherwise, determining the beam to be reported from among beams with measurement results greater than the threshold T. In this embodiment of the present application, the measurement result may be, but is not limited to, a channel state information-reference signal (CSI-RS) or a synchronization signal block (SS block) of the beam measured by the UE. Therefore, in this embodiment, the beam corresponding to the best measurement result refers to a beam with the largest measured value of the SS block or the CSI-RS.

When the measurement result greater than the threshold T exists, a beam reporting principle may be set in advance, and the beam to be reported may be determined according to the beam reporting principle. In an embodiment of the present application, a mode of determining the beam to be reported includes parsing the measurement configuration information transmitted by the base station, obtaining a beam reporting quantity threshold X in the measurement configuration information, selecting at most X beams from among the beams whose measurement results greater than the threshold T and determining the selected beams as beams to be reported. In an embodiment, among the measurement results greater than the threshold T, at most X beams with top measurement results are determined as the beams to be reported. The top measurement results refer to measurement results with top values determined according to values of the measurement results.

In another embodiment of the present application, information of multiple beams to be reported carried in the measurement report are ranked in a high-to-low order according to their measurement results. This ranking mode facilitates the base station to select the beam.

In an embodiment, the information of the beam to be reported includes one of: identification information of the beam; the identification information of the beam and indication information about whether the measurement result of the beam is greater than the threshold T; the identification information of the beam and measurement result information of the beam; or the identification information of the beam, the measurement result information of the beam and the indication information about whether the measurement result of the beam is greater than the threshold T.

Those skilled in the art may select specific information included in the information of the beam to be reported according to needs. In an embodiment of the present application, different information may constitute the information of the beam to be reported according to different magnitude relationships between the measurement results and the threshold T.

In an embodiment, when the measurement results of the multiple beams are all not greater than the threshold T, the information of the beam to be reported includes the identification information of the beam, the measurement result information of the beam and the indication information about whether the measurement result of the beam is greater than the threshold T.

When the measurement result greater than the threshold T exists among the measurement results of the multiple beams, the information of the beam to be reported includes the identification information of the beam.

In summary, the beam measurement reporting method proposed in this embodiment of the present application can implement beam measurement reporting and save radio resources of an air interface, thereby solving the problem in which cell beam measurement reporting cannot be implemented in a 5G network in the related art.

A second embodiment of the present application provides a beam measurement reporting method applied to a UE. This embodiment will give a more detailed description of implementation of the method described in the present application from the perspective of forming the measurement report by a terminal.

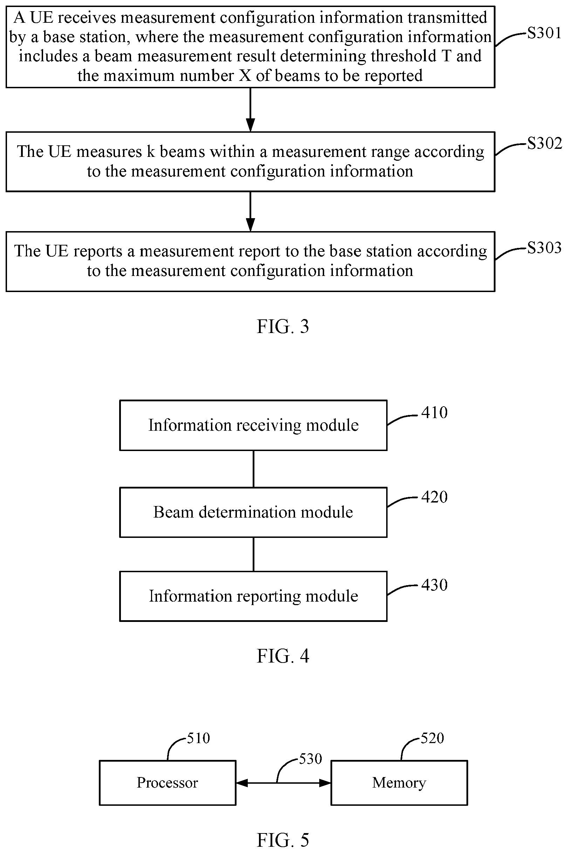

As shown in FIG. 3, the method in this embodiment of the present application includes steps S301 to S303 described below.

In step S301, the UE receives the measurement configuration information transmitted by the base station. The measurement configuration information includes a beam measurement result determining threshold T and the maximum number X of beams to be reported, where X ≥ 1.

In step S302, the UE measures k beams within a measurement range according to the measurement configuration information, where k ≥ 1.

In step S303, the UE reports the measurement report to the base station according to the measurement configuration information, where the measurement report includes, but is not limited to, at least one of the information described below.
(1) List A, which includes the identifier of a beam with the best measurement result, or the identifier of the beam with the best measurement result and a measurement result of the beam when measurement results of multiple beams are all not greater than the threshold T.
(2) List B, which includes identifiers of at most X beams with measurement results greater than the threshold T when a measurement result greater than the threshold T exists, where the beams measurement results corresponding to the beam identifiers stored in list B are ranked from high to low.
(3) List C, which includes identifiers of at most X beams whose measurement results are greater than the threshold T, or the identifier of the beam with the best measurement result and the best measurement result being not greater than the threshold T and the measurement result of the beam.
(4) Indication information about whether the best beam measurement result is greater than the threshold T. When the measurement results of the multiple beams are all not greater than the threshold T, the indication information is "not greater" and otherwise, the indication information is "greater".

In an embodiment, the terminal and the base station may negotiate in advance. When the measurement results of the multiple beams are all not greater than the threshold T, the identifier of the beam corresponding to the best measurement result is written in list A; or when the measurement result greater than the threshold T exists, the identifiers of at most X beams with the measurement results greater than the threshold T are written in list B. In this case, it may be unnecessary to carry the indication information about whether the measurement result of the best beam is greater than the threshold T.

Certainly, the terminal and the base station may not negotiate in advance. In this case, the indication information about whether the measurement result of the best beam is greater than the threshold T needs to be carried in the measurement report fed back by the terminal, so as to inform the base station of the relationship between the measurement result of the beam reported by the base station and the threshold T. In an embodiment, when the measurement results of multiple beams are all not greater than the threshold T, the measurement report further carries the measurement result of the best beam to facilitate the base station to make a handover decision.

The implementation of the embodiments of the present application is described blow in detail by using several examples.

### Example one

This example provides a beam measurement reporting method. The method includes steps 1 to 3 described below.

In step 1, the UE receives the measurement configuration information transmitted by the base station, where the measurement configuration information includes a beam measurement result determining threshold T and the maximum number X of beams to be reported.

In step 2, the UE measures k beams.

In step 3, the UE configures a list A and a list B. The list A is configured to store the identifier of a beam where the beam has a best measurement result not greater than the threshold T, and may further store the measurement result of the beam. The list B is configured to store identifiers of one or more beams with best measurement results, where the measurement results of the one or more beams are greater than the threshold T. The UE determines whether measurement results of multiple beams are all not greater than the threshold T. If the measurement results of multiple beams are all not greater than the threshold T, the identifier of the beam with the best measurement result and the measurement result of the beam are written in the list A; otherwise, the identifiers of at most X beams whose measurement results are greater than the threshold T are written in the list B, where the measurement results of the beams corresponding to the identifiers stored in list B are ranked from high to low.

In step 4, the UE reports the measurement report to the base station, where the measurement report includes the list A or the list B.

In step 5, the base station receives the measurement report from the UE, and parses the measurement report to obtain the information in the list A or the list B.

In step 6, the base station uses the obtained beam with a measurement result greater than the threshold T or the best beam with a measurement result not greater than the threshold T as the basis for handover decision and the like.

### Example two

This example provides a beam measurement reporting method. The method includes steps 1 to 6 described below.

In step 1, the UE receives the measurement configuration information from the base station, where the measurement configuration information includes a beam measurement result determining threshold T and the maximum number X of beams to be reported.

In step 2, the UE measures k beams.

In step 3, the UE configures a list C. The list C includes identifiers of at most X beams whose measurement results are greater than the threshold T, or includes the identifier of a beam whish has the best measurement result and the measurement result is not greater than the threshold T. The UE selects at most X beams with the measurement results greater than the threshold T from among the k beams and writes the identification information of these beams into the list C. Alternatively, if there is no beam having a measurement result greater than the threshold T, the UE selects the beam with the best measurement result and writes the identifier and the measurement result of the beam into the list C.

In step 4, the UE reports the measurement report to the base station, where the measurement report includes the list C and indication information about whether the measurement result of the best beam is greater than the threshold T. When there is no beam with the measurement result greater than the threshold T, the indication information is "not greater", otherwise is "greater".

In step 5, the base station receives the measurement report from the UE, and parses the measurement report to obtain the information in the list C and the indication information about whether the measurement result of the best beam is greater than the threshold T.

In step 6, the base station uses the obtained beam with a measurement result greater than the threshold T or the best beam with a measurement result not greater than the threshold T as the basis for handover decision and the like.

A third embodiment of the present application provides a beam measurement reporting device applied to a terminal. As shown in FIG. 4, the device includes an information receiving module 410, a beam determination module 420 and an information reporting module 430.

The information receiving module 410 is configured to receive the measurement configuration information transmitted by the base station.

The beam determination module 420 is configured to perform beam measurement according to the measurement configuration information and determine a beam to be reported by using a beam measurement result determining threshold T carried in the measurement configuration information.

The information reporting module 430 is configured to report the measurement report to the base station, where the measurement report carries information of the beam to be reported.

In an embodiment of the present application, the beam determination module 420 is configured to determine, when measurement results of multiple beams are all not greater than the threshold T, a beam corresponding to a best measurement result as the beam to be reported, and determine, when the measurement results of multiple beams include measurement results greater than the threshold T, the beam to be reported from among beams with measurement results greater than the threshold T.

In an embodiment of the present application, the measurement configuration information further carries a beam reporting quantity threshold X.

In this case, the beam determination module 420 is configured to select at most X beams from among the beams with the measurement results greater than the threshold T and determine the selected beams as the beams to be reported.

In another embodiment of the present application, beam information of multiple beams to be reported carried in the measurement report by the information reporting module 430 are ranked from high to low according to their measurement results.

In an embodiment, the information of the beam to be reported includes identification information of the beam, or the identification information of the beam and one or more of measurement result information of the beam and indication information about whether the measurement result of the beam is greater than the threshold T.

In an embodiment of the present application, when the measurement results of multiple beams are all not greater than the threshold T, the information of the beam to be reported includes the identification information of the beam, the measurement result information of the beam and the indication information about whether the measurement result of the beam is greater than the threshold T; and when the measurement result greater than the threshold T exists among the measurement results of the multiple beams, the information of the beam to be reported includes the identification information of the beam.

In summary, the beam measurement reporting method proposed in this embodiment of the present application can implement beam measurement reporting and save radio resources of an air interface, thereby solving the problem in which cell beam measurement reporting cannot be implemented in a 5G network in the related art.

A fourth embodiment in the present application provides a terminal. As shown in FIG.5, the terminal includes a processor 510, a memory 520 and a communication bus 530. The communication bus 530 is configured to implement connection and communication between the processor 510 and the memory 520. The processor 510 is configured to execute a beam measurement reporting program stored in the memory 520 to perform the following method: receiving the measurement configuration information transmitted by the base station, performing beam measurement according to the measurement configuration information and determining a beam to be reported by using a beam measurement result determining threshold T carried in the measurement configuration information, and reporting the measurement report to the base station, where the measurement report carries information of the beam to be reported.

In this embodiment of the present application, the measurement configuration information includes, but is not limited to, the measurement object, the reporting configuration and the measurement identification. The reporting configuration includes the beam measurement result determining threshold T.

In an embodiment of the present application, the step of determining the beam to be reported by using the beam measurement result determining threshold T carried in the measurement configuration information includes determining whether measurement results of multiple beams are all not greater than the threshold T, determining a beam having the best measurement result as the beam to be reported if the measurement results of multiple beams are all not greater than the threshold T, otherwise determining the beam to be reported from among beams with measurement results greater than the threshold T.

When a measurement result greater than the threshold T exists, a beam reporting principle may be set in advance, and the beam to be reported may be determined according to the beam reporting principle. In an embodiment of the present application, a mode of determining the beam to be reported includes parsing the measurement configuration information transmitted by the base station, obtaining a beam reporting quantity threshold X in the measurement configuration information, selecting at most X beams from among the beams with the measurement results greater than the threshold T and determining the selected beams as beams to be reported. Among the measurement results greater than the threshold T, at most X beams with top measurement results are determined as the beams to be reported.

In another embodiment of the present application, beam information of the beams to be reported carried in the measurement report are ranked from high to low according to values of their measurement results. This ranking mode is convenient for the base station to select the beam.

In an embodiment, the information of the beam to be reported includes one of identification information of the beam; the identification information of the beam and indication information about whether the measurement result of the beam is greater than the threshold T; the identification information of the beam and measurement result information of the beam; or the identification information of the beam, the measurement result information of the beam and the indication information about whether the measurement result of the beam is greater than the threshold T.

Those skilled in the art may select specific information included in the information of the beam to be reported according to needs. In an embodiment of the present application, different information components may be adopted as the information of the beam to be reported according to different magnitude relationships between the measurement results and the threshold T. In an embodiment, when the measurement results of multiple beams are all not greater than the threshold T, the information of the beam to be reported includes the identification information of the beam, the measurement result information of the beam and the indication information about whether the measurement result of the beam is greater than the threshold T; and when the measurement result greater than the threshold T exists among the measurement results of the multiple beams, the information of the beam to be reported includes the identification information of the beam.

In summary, the terminal proposed in this embodiment of the present application can implement beam measurement reporting and save radio resources of an air interface, thereby solving the problem in which cell beam measurement reporting cannot be implemented in a 5G network in the related art.

A fifth embodiment of the present disclosure provides a computer-readable storage medium storing one or more programs. One or more processors may execute the one or more programs to perform the method and steps described in the first embodiment or the second embodiment of the present application.

The beam measurement reporting method has been specifically described in the first and second embodiments and will not be repeated in this embodiment.

In this embodiment, the storage medium may be, but is not limited to, a read-only memory (ROM), a random access memory (RAM), a magnetic disk, an optical disk, or the like.

## Claims

1. A beam measurement reporting method, performed by a terminal, comprising:
receiving (S201) measurement configuration information transmitted by a base station;
performing (S202) beam measurement according to the measurement configuration information and determining a beam to be reported by using a beam measurement result determining threshold T carried in the measurement configuration information; and
reporting (S203) a measurement report to the base station, wherein the measurement report carries information of the beam to be reported,
**characterized in that** wherein determining the beam to be reported by using the beam measurement result determining threshold T carried in the measurement configuration information comprises:
when none of measurement results of a plurality of beams is greater than the threshold T, determining a beam corresponding to a best measurement result of current measurement as the beam to be reported; and
when the measurement results of the plurality of beams include measurement results greater than the threshold T, determining the beam to be reported from among beams whose measurement results are greater than the threshold T.

2. The method of claim 1, wherein the measurement configuration information further carries a beam reporting quantity threshold X; and
wherein determining the beam to be reported from among the beams whose measurement results are greater than the threshold T comprises:
selecting at most X beams from among the beams whose measurement results are greater than the threshold T and determining the selected beams as beams to be reported.

3. The method of any one of claims 1 to 2, wherein beam information of beams to be reported carried in the measurement report is ranked in a high-to-low order according to their measurement results.

4. The method of any one of claims 1 to 2, wherein the information of the beam to be reported comprises one of:
identification information of the beam;
the identification information of the beam and indication information about whether a measurement result of the beam is greater than the threshold T;
the identification information of the beam and measurement result information of the beam;
or
the identification information of the beam, the measurement result information of the beam and the indication information about whether the measurement result of the beam is greater than the threshold T.

5. The method of claim 4, wherein
when none of measurement results of a plurality of beams is greater than the threshold T, the information of the beam to be reported comprises the identification information of the beam, the measurement result information of the beam and the indication information about whether the measurement result of the beam is greater than the threshold T; and
when the measurement results of the plurality of beams include a measurement result greater than the threshold T, the information of the beam to be reported comprises the identification information of the beam.

6. A beam measurement reporting device, applied in a terminal, comprising:
an information receiving module (410), which is configured to receive measurement configuration information transmitted by a base station;
a beam determination module (420), which is configured to perform beam measurement according to the measurement configuration information and determine a beam to be reported by using a beam measurement result determining threshold T carried in the measurement configuration information; and
an information reporting module (430), which is configured to report a measurement report to the base station, wherein the measurement report carries information of the beam to be reported,
**characterized in that** wherein the beam determination module is configured to determine, when none of measurement results of a plurality of beams is greater than the threshold T, a beam corresponding to a best measurement result of current measurement as the beam to be reported, and determine, when the measurement results of the plurality of beams include measurement results greater than the threshold T, the beam to be reported from among beams whose measurement results are greater than the threshold T.

7. The device of claim 6, wherein the measurement configuration information further carries a beam reporting quantity threshold X; and
wherein the beam determination module is configured to select at most X beams from among the beams whose the measurement results are greater than the threshold T and determine the selected beams as beams to be reported.

8. The device of any one of claims 6 to 7, wherein the information of the beam to be reported comprises one of:
identification information of the beam;
the identification information of the beam and indication information about whether a measurement result of the beam is greater than the threshold T;
the identification information of the beam and measurement result information of the beam;
or
the identification information of the beam, the measurement result information of the beam and the indication information about whether the measurement result of the beam is greater than the threshold T.

9. A terminal, comprising: a processor (510), a memory (520) and a communication bus (530), wherein the communication bus is configured to implement connection and communication between the processor and the memory, and the processor is configured to execute a beam measurement reporting program stored in the memory to perform the method of any one of claims 1 to 5.

10. A computer-readable storage medium, storing at least one program, wherein the at least one program when executed by at least one processor at a terminal, causes the terminal to perform the method of any one of claims 1 to 5.

## Patentansprüche

1. Strahlmessung-Meldeverfahren, ausgeführt durch ein Endgerät, umfassend:
Empfangen (S201) von Messkonfigurationsinformationen, die von einer Basisstation übertragen werden;
Ausführen (S202) einer Strahlmessung gemäß den Messkonfigurationsinformationen und Bestimmen eines zu meldenden Strahls durch Verwenden eines Strahlmessresultats, der einen Schwellenwert T bestimmt, der in den Messkonfigurationsinformationen enthalten ist; und
Melden (S203) eines Messberichts an die Basisstation, wobei der Messbericht Informationen über den zu meldenden Strahl enthält,
**dadurch gekennzeichnet, dass** ein Bestimmen des zu meldenden Strahls durch Verwenden des Strahlmessresultats, der einen Schwellenwert T bestimmt, der in den Messkonfigurationsinformationen enthalten ist, Folgendes umfasst:
wenn keines der Messresultate einer Vielzahl von Strahlen größer ist als der Schwellenwert T, Bestimmen eines Strahls, der einem besten Messresultat der aktuellen Messung entspricht, als der zu meldende Strahl; und
wenn die Messresultate der Vielzahl von Strahlen Messresultate enthalten, die größer sind als der Schwellenwert T sind, Bestimmen des zu meldenden Strahls aus den Strahlen, deren Messresultate größer sind als der Schwellenwert T.

2. Verfahren nach Anspruch 1, wobei die Messkonfigurationsinformation ferner einen Strahlmeldungsmenge-Schwellenwert X enthält; und
wobei ein Bestimmen des zu meldenden Strahls aus den Strahlen, deren Messresultate größer sind als der Schwellenwert T, Folgendes umfasst:
Auswählen von höchstens X-Strahlen aus den Strahlen, deren Messresultate größer sind als der Schwellenwert T, und Bestimmung der ausgewählten Strahlen als zu meldende Strahlen.

3. Verfahren nach einem der Ansprüche 1 bis 2, wobei die Strahleninformationen der zu meldenden Strahlen, die in dem Messbericht enthalten sind, in einer Reihenfolge von oben nach unten entsprechend ihren Messresultaten angeordnet sind.

4. Verfahren nach einem der Ansprüche 1 bis 2, wobei die zu meldenden Informationen des Strahls eines von Folgenden umfassen:
Identifikationsinformationen des Strahls;
den Identifikationsinformationen des Strahls und den Anzeigeinformationen darüber, ob ein Messresultat des Strahls größer ist als der Schwellenwert T;
den Identifizierungsinformationen des Strahls und den Messresultatinformationen des Strahls;
oder
den Identifikationsinformation des Strahls, den Messresultatinformationen des Strahls und den Anzeigeinformationen darüber, ob das Messresultat des Strahls größer ist als der Schwellenwert T.

5. Verfahren nach Anspruch 4, wobei:
wenn keines der Messresultate einer Vielzahl von Strahlen größer ist als der Schwellenwert T, die Informationen des zu meldenden Strahls die Identifikationsinformationen des Strahls, die Messresultatinformationen des Strahls und die Anzeigeinformationen darüber, ob das Messresultat des Strahls größer ist als der Schwellenwert T, umfasst; und
wenn die Messresultate der Vielzahl von Strahlen ein Messresultat enthalten, das größer ist als der Schwellenwert T ist, die Informationen des zu meldenden Strahls die Identifikationsinformationen des Strahls umfassen.

6. Strahlmessung-Meldevorrichtung, angewendet in einem Endgerät, umfassend:
ein Informationsempfangsmodul (410), das konfiguriert ist, um von einer Basisstation übertragene Messkonfigurationsinformationen zu empfangen;
ein Strahlbestimmungsmodul (420), das konfiguriert ist, um eine Strahlmessung gemäß den Messkonfigurationsinformationen auszuführen und einen zu meldenden Strahl zu bestimmen, indem es einen in den Messkonfigurationsinformationen enthaltenen Schwellenwert T für das Strahlmessresultat verwendet; und
ein Informationsmeldemodul (430), das konfiguriert ist, um einen Messbericht an die Basisstation zu melden, wobei der Messbericht Informationen über den zu meldenden Strahl enthält,
**dadurch gekennzeichnet, dass** das Strahlbestimmungsmodul konfiguriert ist, um, wenn keines der Messresultate einer Vielzahl von Strahlen größer ist als der Schwellenwert T, einen Strahl, der einem besten Messresultat der aktuellen Messung entspricht, als den zu meldenden Strahl zu bestimmen, und, wenn die Messresultate der Vielzahl von Strahlen Messresultate enthalten, die größer sind als der Schwellenwert T, den zu meldenden Strahl aus den Strahlen zu bestimmen, deren Messresultate größer sind als der Schwellenwert T.

7. Vorrichtung nach Anspruch 6, wobei die Messkonfigurationsinformationen ferner einen Strahlmeldungsmenge-Schwellenwert X enthält; und
wobei das Strahlbestimmungsmodul konfiguriert ist, um höchstens X-Strahlen aus den Strahlen auszuwählen, deren Messresultate größer sind als der Schwellenwert T, und die ausgewählten Strahlen als zu meldende Strahlen zu bestimmen.

8. Vorrichtung nach einem der Ansprüche 6 bis 7, wobei die zu meldenden Informationen des Strahls eines von Folgenden umfasst:
Identifikationsinformationen des Strahls;
den Identifikationsinformationen des Strahls und den Anzeigeinformationen darüber, ob ein Messresultat des Strahls größer ist als der Schwellenwert T;
den Identifizierungsinformationen des Strahls und den Messresultatinformationen des Strahls;
oder
den Identifikationsinformation des Strahls, den Messresultatinformationen des Strahls und den Anzeigeinformationen darüber, ob das Messresultat des Strahls größer ist als der Schwellenwert T.

9. Endgerät, umfassend: einen Prozessor (510), einen Speicher (520) und einen Kommunikationsbus (530), wobei der Kommunikationsbus konfiguriert ist, um eine Verbindung und Kommunikation zwischen dem Prozessor und dem Speicher zu implementieren, und der Prozessor konfiguriert ist, um ein in dem Speicher gespeichertes Strahlmessungsmeldeprogramm auszuführen, um das Verfahren nach einem der Ansprüche 1 bis 5 durchzuführen.

10. Computerlesbares Speichermedium, das mindestens ein Programm speichert, wobei das mindestens ein Programm, wenn es von mindestens einem Prozessor auf einem Endgerät ausgeführt wird, das Endgerät veranlasst, das Verfahren nach einem der Ansprüche 1 bis 5 durchzuführen.

## Revendications

1. Procédé de signalement de mesure de faisceau, réalisé par un terminal, comprenant :
la réception (S201) d'informations de configuration de mesure transmises émises à partir d'une station de base ;
la réalisation (S202) d'une mesure de faisceau conformément aux informations de configuration de mesure et la détermination d'un faisceau à signaler en utilisant un seuil T de détermination du résultat de mesure de faisceau figurant dans les informations de configuration de mesure ; et
le signalement (S203) d'un rapport de mesure à la station de base, dans lequel le rapport de mesure contient des informations sur le faisceau à signaler,
**caractérisé en ce que** la détermination du faisceau à signaler en utilisant le seuil T de détermination du résultat de mesure du faisceau figurant dans les informations de configuration de mesure comprend :
lorsqu'aucun des résultats de mesure d'une pluralité de faisceaux n'est supérieur au seuil T, la détermination d'un faisceau correspondant au meilleur résultat de mesure de la mesure actuelle comme le faisceau à signaler ; et
lorsque les résultats de mesure de la pluralité de faisceaux comprennent des résultats de mesure supérieurs au seuil T, la détermination du faisceau à signaler parmi les faisceaux dont les résultats de mesure sont supérieurs au seuil T.

2. Procédé selon la revendication 1, dans lequel les informations de configuration de mesure comportent en outre un seuil X de quantité de signalement de faisceau ; et
dans lequel la détermination du faisceau à signaler parmi les faisceaux dont les résultats de mesure sont supérieurs au seuil T comprend :
la sélection d'au plus X faisceaux parmi les faisceaux dont les résultats de mesure sont supérieurs au seuil T et la détermination des faisceaux sélectionnés comme faisceaux à signaler.

3. Procédé selon l'une quelconque des revendications 1 et 2, dans lequel les informations de faisceau sur les faisceaux à signaler figurant dans le rapport de mesure sont classées par ordre décroissant en fonction de leurs résultats de mesure.

4. Procédé selon l'une quelconque des revendications 1 et 2, dans lequel les informations sur le faisceau à signaler comprennent :
des informations d'identification du faisceau ;
les informations d'identification du faisceau et des informations indiquant si un résultat de mesure du faisceau est supérieur au seuil T ;
les informations d'identification du faisceau et des informations relatives au résultat de mesure du faisceau ; ou
les informations d'identification du faisceau, les informations relatives au résultat de mesure du faisceau et les informations indiquant si le résultat de mesure du faisceau est supérieur au seuil T.

5. Procédé selon la revendication 4, dans lequel
lorsqu'aucun des résultats de mesure d'une pluralité de faisceaux n'est supérieur au seuil T, les informations sur le faisceau à signaler comprennent les informations d'identification du faisceau, les informations relatives au résultat de mesure du faisceau et les informations indiquant si le résultat de mesure du faisceau est supérieur au seuil T ; et
lorsque les résultats de mesure de la pluralité de faisceaux comprennent un résultat de mesure supérieur au seuil T, les informations sur le faisceau à signaler comprennent les informations d'identification du faisceau.

6. Dispositif de signalement de mesure de faisceau, appliqué dans un terminal, comprenant :
un module de réception d'informations (410), configuré pour recevoir des informations de configuration de mesure émises à partir d'une station de base ;
un module de détermination de faisceau (420), configuré pour effectuer une mesure de faisceau conformément aux informations de configuration de mesure et déterminer un faisceau à signaler en utilisant un seuil T de détermination du résultat de mesure de faisceau figurant dans les informations de configuration de mesure ; et
un module de signalement d'informations (430), configuré pour transmettre un rapport de mesure à la station de base, dans lequel le rapport de mesure contient des informations sur le faisceau à signaler,
**caractérisé en ce que** le module de détermination de faisceau est configuré pour déterminer, lorsqu'aucun des résultats de mesure d'une pluralité de faisceaux n'est supérieur au seuil T, un faisceau correspondant à un meilleur résultat de mesure de la mesure actuelle comme le faisceau à signaler, et pour déterminer, lorsque les résultats de mesure de la pluralité de faisceaux comprennent des résultats de mesure supérieurs au seuil T, le faisceau à signaler parmi les faisceaux dont les résultats de mesure sont supérieurs au seuil T.

7. Dispositif selon la revendication 6, dans lequel les informations de configuration de mesure comportent en outre un seuil X de quantité de signalement de faisceau ; et
dans lequel le module de détermination de faisceau est configuré pour sélectionner au plus X faisceaux parmi les faisceaux dont les résultats de mesure sont supérieurs au seuil T et déterminer les faisceaux sélectionnés comme faisceaux à signaler.

8. Dispositif selon l'une quelconque des revendications 6 et 7, dans lequel les informations sur le faisceau à signaler comprennent :
des informations d'identification du faisceau ;
les informations d'identification du faisceau et des informations indiquant si un résultat de mesure du faisceau est supérieur au seuil T ;
les informations d'identification du faisceau et des informations relatives au résultat de mesure du faisceau ; ou
les informations d'identification du faisceau, les informations relatives au résultat de mesure du faisceau et les informations indiquant si le résultat de mesure du faisceau est supérieur au seuil T.

9. Terminal, comprenant : un processeur (510), une mémoire (520) et un bus de communication (530), dans lequel le bus de communication est configuré pour mettre en oeuvre la connexion et la communication entre le processeur et la mémoire, et le processeur est configuré pour exécuter un programme de signalement de mesure de faisceau stocké dans la mémoire pour mettre en oeuvre le procédé selon l'une quelconque des revendications 1 à 5.

10. Support de stockage lisible par ordinateur, stockant au moins un programme, dans lequel l'au moins un programme, lorsqu'il est exécuté par au moins un processeur sur un terminal, amène le terminal à réaliser le procédé selon l'une quelconque des revendications 1 à 5.
